# EUROPÄISCHE PATENTSCHRIFT

(11) **EP 1 468 200 B1**
(45) Veröffentlichungstag und Bekanntmachung des Hinweises auf die Patenterteilung: **23.05.2007**
(21) Anmeldenummer: 03704393.2
(22) Anmeldetag: 15.01.2003
(51) Int. Cl.: F16D 23/02

(54) **MEHRTEILIGER SYNCHRONRING EINER SYNCHRONISIEREINRICHTUNG**
MULTI-PART SYNCHRONOUS RING OF A SYNCHRONISATION DEVICE
ANNEAU DE SYNCHRONISATION EN PLUSIEURS PARTIES D'UN DISPOSITIF DE SYNCHRONISATION

(30) Priorität: 26.01.2002 DE 10203019
(43) Veröffentlichungstag der Anmeldung: 20.10.2004
(73) Patentinhaber: Schaeffler KG, 91074 Herzogenaurach (DE)
(72) Erfinder: SCHWUGER, Josef, 91074 Herzogenaurach (DE); BÖSSNER, Ralf, 91217 Hersbruck (DE)
(86) Internationale Anmeldenummer: PCT/EP2003/000306
(87) Internationale Veröffentlichungsnummer: WO 2003/062659

(56) Entgegenhaltungen:
- EP-A- 1 101 965
- DE-A- 3 032 787
- DE-A- 19 718 905
- DE-A- 19 853 856
- DE-A- 19 853 894
- FR-A- 2 787 536
- GB-A- 2 357 815
- PATENT ABSTRACTS OF JAPAN vol. 1997, no. 03, 31. März 1997 (1997-03-31) & JP 08 290227 A (NAKANISHI KINZOKU KOGYO KK), 5. November 1996 (1996-11-05)

## Beschreibung

### Gebiet der Erfindung

Die Erfindung betrifft einen mehrteiligen Synchronring einer Synchronisiereinrichtung mit einem ringförmig ausgebildeten Grundkörper und mit wenigstens einer Reibfläche an dem Grundkörper, wobei der Synchronring umfangsseitig eine radial nach außen gerichtete Verzahnung aufweist und wobei an dem Synchronring der Verzahnung gegenüberliegend wenigstens ein Mitnehmer radial absteht.

### Hintergrund der Erfindung

DE 198 53 856 A1 zeigt einen im Umformverfahren aus Blech gefertigten Synchronring mit einem im Wesentlichen ausgebildeten konischen Ringkörper. Am Rand des Synchronringes mit dem großen Konusdurchmesser ist eine radial nach außen weisende und sich umfangsseitig erstreckende Verzahnung ausgebildet. An dem Rand mit dem kleinen Konusdurchmesser stehen radial nach außen von der Rotationsachse des Synchronringes wegweisend Anschläge oder Mitnehmer hervor. Diese Anschläge bzw. Mitnehmer sind beispielsweise für einen formschlüssigen Eingriff in einen Synchronkörperträger vorgesehen. Die Anschläge sind einteilig mit dem Synchronring ausgebildet und radial nach außen geformt. Eine derartige Gestaltung des Synchronringes ist an sich zufriedenstellend, sie erfordert jedoch umformtechnisch einen relativ hohen Aufwand. Der Aufwand entsteht durch zusätzliche Arbeitsschritte nach dem Formen des Napfes für den Synchronring, bei denen aus dem Boden des Napfes die Anschläge bzw. Mitnehmer radial nach außen weisend umgelegt werden müssen. Nachteilig ist weiterhin, dass sich die Anforderungen an das Material der Mitnehmer des Synchronringes mit den Anforderungen an das ReibverhaJten der konischen Reibfläche teilweise widersprechen. Die Anschläge müssen über die gesamte Lebensdauer des Getriebes möglichst starr und verschleißfest ausgebildet sein. An den Reib- bzw. Gegenreibflächen einer Synchronisierung des Getriebes sind jedoch bevorzugt unterschiedliche Werkstoffpaarungen einzusetzen, um z. B. konstante Reibwerte über die gesamte Lebensdauer bei hoher Reibleistung zu gewährleisten. Es ist nach DE 198 53 894 A1 bekannt, einen Synchronaußenring aus mehreren Teilen zu fertigen. Der Synchronring besteht aus einer Scheibe mit einer Außenverzahnung und einem Grundkörper mit einer konischen Reibfläche. Die Scheibe und der Grundkörper sind getrennt hergestellt und aneinander befestigt. Dieses Dokument enthält keine Angaben über die Werkstoffe der Teile des Synchronaußenrings. Ein Synchronring mit radial nach außen weisenden Mitnehmern ist nach dem in diesem Dokument beschriebenen Verfahren nicht oder unter großem Aufwand herstellbar.

Um die Masse eines einteiligen, massiven Synchronrings zu reduzieren, schlägt GB 2 357 815 A einen zweiteiligen Synchronring mit einem Mitnahmekranz aus Metall und einem Positionierkranz aus einer nicht metallischen Verbindung vor. Dabei wird der Positionierkranz auf den Mitnahmekranz aufgeformt.

### Zusammenfassung der Erfindung

Die Aufgabe der Erfindung ist es daher, einen Synchronring zu schaffen, dessen nach innen oder außen gerichteten Anschläge mit einer hohen Festigkeit hergestellt sind und der weiterhin im Bereich der Reibflächen vorzugsweise einen möglichst konstanten Reibwert über die Gesamtlebensdauer des Getriebes gewährleistet.

Diese Aufgabe ist nach dem Gegenstand des Anspruchs 1 dadurch gelöst, dass die Mitnehmer bzw. Anschläge an einer ringförmigen zu dem Grundkörper separaten Scheibe ausgebildet sind. Die Mitnehmer stehen dabei radial nach außen von der Rotationsachse des Synchronringes wegweisend aus der Scheibe hervor oder weisen alternativ radial nach innen zu der Rotationsachse hin. Die getrennte Fertigung der Scheibe mit den Anschlägen und Mitnehmern sowie des Grundkörpers des Synchronringes lässt eine flexible und den spezifischen Anforderungen angepasste Gestaltung des Synchronringes zu.

So sind mit Ausgestaltungen der Erfindung Scheiben vorgesehen, bei denen die Mitnehmer in ihrem Querschnitt winkelförmig ausgebildet sind. Dabei verlaufen die Mitnehmer anfangs von dem Blech der Scheibe abgewinkelt stirnseitig des Synchronrings aus der Scheibe hervorstehend. Je nach Ausführung der Mitnehmer sind diese dann in ihrem weiteren Verlauf radial nach innen oder außen stehend abgewinkelt.

Der stirnseitig hervorstehende Anteil des Mitnehmers verleiht dem Mitnehmer an den in Umfangsrichtung weisenden Flanken des Mitnehmers eine größere Auflagefläche. An den Flanken des beispielsweise in eine Ausnehmung des Synchronkörperträgers greifenden Mitnehmers ist die Kontaktpressung an dem Kontakt zu der Aufnahme gemindert. Die Länge des stirnseitig aus der Scheibe hervorstehenden Abschnittes des Mitnehmers ist den axialen Abständen zwischen dem Mitnehmer und der Ausnehmung anpassbar, so dass auch größere konstruktions- und funktionsbedingte Abstände zwischen dem Synchronring und dem Synchronkörperträger mittels des Mitnehmers überbrückbar sind.

Eine derartige Scheibe lässt sich aus Blech herstellen und ihre Formgebung durch Stanzen und anschließendes Biegen bzw. Prägen ist einfach und kostengünstig.

Eine weitere Ausgestaltung der Erfindung sieht vor, dass die L-förmigen und von der Stirnseite der Scheibe abstehenden Mitnehmer in beide Rotationsrichtungen des Synchronringes weisende verbreiterte Flanken aufweist. Die Flanken sind aus dem Blech des Mitnehmers geformt. Dabei sind aus dem Mitnehmer Abschnitte in Richtung der äußeren Verzahnung gebogen. Es ist eine verbesserte Anlage des Synchronringes mit seinen Mitnehmern an dem Synchronkörperträger in Drehrichtung erzielt. Alternativ ist vorgesehen, dass die Abschnitte an einem L-förmigen oder aber auch an einem ungekröpft radial aus der Scheibe hervorstehenden Mitnehmer von dem Mitnehmer derartig abgebogen sind, dass die Abschnitte von der Verzahnung und somit von dem Synchronring wegweisen. Die verbreiterten Flanken weisen auch bei der letztgenannten Ausgestaltung in die Rotationsrichtungen.

In einer bevorzugten Ausgestaltung der Erfindung ist der Grundkörper mit der Scheibe starr verbunden. Es entsteht ein einheitliches Bauteil von hoher Festigkeit und Formgenauigkeit. Weiter ausgestaltet ist die Erfindung dadurch, dass der Grundkörper und die Scheibe miteinander verschweißt sind. Die Scheibe und der Grundkörper sind dabei aus Stahl gebildet, wobei der Grundkörper wahlweise mit einem Reibbelag versehen ist. Alternativ dazu ist die Scheibe aus einem mit Messing verschweißbaren Stahlwerkstoff hergestellt und der Grundkörper ist aus Messing gebildet. Der Grundkörper und die Scheibe sind vorzugsweise miteinander verschweißt.

Für die Befestigung der Scheibe an dem Grundkörper ist mit einer weiteren Ausgestaltung der Erfindung vorgesehen, dass der Grundkörper stirnseitig aus dem Grundkörper hervorstehende und sich mit der Rotationsachse erstreckende Laschen aufweist. Die Laschen an dem Grundkörper greifen formschlüssig in der Form der Laschen angepasste Ausnehmungen in der Scheibe ein. Die Scheibe selbst ist vorzugsweise ein Stanzteil. Die Ausnehmungen in der Scheibe sind vorzugsweise durchgehend gestanzte Löcher. Es ist weiter vorgesehen die Laschen in den Ausnehmungen bzw. an der Scheibe zu verschweißen. Alternativ dazu sieht eine Ausgestaltung vor, dass die Laschen formschlüssig in die Ausnehmungen eingeführt sind und die Laschen dann plastisch so verformt werden, dass der Grundkörper und die Scheibe unlösbar miteinander verbunden sind. Diese zusätzliche Verprägung der Laschen gibt einen erhöhten Halt und erhöhte Festigkeit.

Die Einzelteile Grundkörper und Scheibe sind mit unterschiedlichen Fertigungsverfahren herstellbar. Eine Ausgestaltung der Erfindung sieht vor, dass der Grundkörper ein Formteil, z. B. ein Ziehteil oder Prägeteil, und die Scheibe ein Stanzteil ist. Weiterhin lässt eine getrennte Fertigung des Grundkörpers und der Scheibe den Einsatz unterschiedlicher Materialstärken zu. So ist vorgesehen, dass der Grundkörper und die Scheibe zwar aus Blech gebildet sind, jedoch der Grundkörper aus einem Blech geformt ist, dessen Dicke in seinem Ausgangszustand von der Dicke des Bleches der Scheibe abweicht. Es ist weiterhin vorgesehen, dass für das Blech des Grundkörpers ein anderer Stahlwerkstoff zum Einsatz kommt als für das Blech der Scheibe. Der Grundkörper und die Scheibe aus gleichem oder unterschiedlichem Stahlwerkstoff sind vorteilhaft zumindest an ihre Oberfläche mit voneinander abweichenden Härtegraden versehen. Dazu sind der Grundkörper und die Scheibe unterschiedlich oberflächenbehandelt bzw. gehärtet und/oder unterscheiden sich zumindest in der Härte an ihrer Oberfläche. Dabei sind insbesondere Verfahren zum Härten der Bauteile wie Einsatzhärten, Durchhärten bzw. Nitrocarborieren vorgesehen. Denkbar ist auch eine gehärtete Scheibe mit dem Mitnehmer mit einem Grundkörper aus einem ungehärteten Werkstoff zu verbinden.

Schließlich ist mit einer weiteren Ausgestaltung ein dreiteiliger Synchronring vorgesehen. Dabei ist die Verzahnung des Synchronkörpers separat zum Grundkörper und aus Stahl ausgebildet. Der Grundkörper ist aus Messing oder zumindest mit Messing beschichtet. An dem Grundkörper ist weiterhin die Scheibe aus Stahl befestigt. Die Verzahnung ist vorzugsweise aus einem mit Messing verschweißbaren Stahlwerkstoff hergestellt und an dem Grundkörper durch Schweißen befestigt.

Es ist vorgesehen, dass für die Herstellung der Reibfläche oder für die Herstellung des vollständigen Grundkörpers eine schweißbare Messinglegierung zur Anwendung kommt, die vorzugsweise 50 bis 75% Kupfer enthält. Eine gut schweißbare Kupferlegierung besteht aus 55% bis 60% Kupfer, 30% bis 40% Zink, Rest Blei, Aluminium, Mangan, Eisen und Zinn. Entsprechende Legierungsbezeichnungen sind: CuZnAl1; CuZn15; CuZn37; CuZn31Si; CuZn39Pb1Al-C-GM. Die Verschweißung der Kupferlegierung mit dem Stahl erfolgt mittels eines Widerstandsschweißverfahren. Hierbei sind vorzugsweise Punktschweißen, Press-Stumpfschweißen, Rollnahtschweißen, Buckelschweißen, Mittelfrequenz-Widerstandsschweißen oder Kondensator-Impulsschweißen vorgesehen. Bei der Punkt- und Rollnahtschweißung wird der Strom punktförmig bzw. entlang einer Nahtstelle über eine Rolle zugeführt. Beim Buckelschweißen sind an den zu schweißenden Flächen Erhebungen (Buckel) vorgesehen, über die dann bevorzugt der Strom fließt, so dass die Verschweißung an diesen Stellen beginnt. Das Mittelfrequenz-Widerstandsschweißen sieht Mittelfrequenzsysteme mit Invertern vor, die eine Zwischenfrequenz von ca. 1000 Hz aufweisen. Bei dem Kondensator-Impulsschweißen wird über einen Kondensator ein sehr kurzfristig fließender Strom aufgebracht, der ein sehr werkstoffschonendes Schweißen gewährleistet Es sei darauf hingewiesen, dass die Schweißungen nicht nur durch die vorgenannten Schweißverfahren sondern auch durch Reibschweißen erfolgen können, wobei beim Reibschweißen die Schweißenergie durch Reibung, Druck, Temperatur und Umformung erzeugt wird. Für das Verschweißen von Stahl mit Stahl sind vorzugsweise Laserschweiß- und Kondensatorentladungsschweißverfahren vorgesehen.

An einem Synchronring gemäß Erfindung ist der Anteil der Reibfläche bei vergleichsweise gleicher Breite des Synchronringes zu Synchronringen aus dem Stand der Technik größer. Die Länge des Reibkonus kann deshalb vergrößert werden, da bei der mehrteiligen Auslegung kein Ziehradius vom Konus zur Bodenfläche des Ziehnapfes benötigt wird. Das Beschichten der einzelnen oder von zwei Konusflächen am Synchronring ist einfacher. Es erfolgt vorzugsweise vor dem Zusammenfügen der Einzelteile des Synchronringes.

Es ist der Einsatz von Reibbelägen in Folienform vorgesehen. In dem Verbindungsspalt zwischen dem Grundkörper und der Scheibe ist ein Reibbelag in Folienform beispielsweise zusätzlich durch Verklemmen gesichert.

Durch die Auswahl unterschiedlicher Blechdicken und/oder Materialarten für den Grundkörper und die Scheibe ist ein Optimum zwischen Funktion und Kosten bei der Herstellung der Einzelteile erreichbar. Die Bearbeitungszeiten sind verkürzt, da z. B. das Schleifen der Reibflächen an dem Grundkörper ohne Anschläge vereinfacht ist.

### Kurze Beschreibung der Zeichnungen

Die Erfindung wird nachfolgend anhand von Ausführungsbeispielen näher erläutert. Es zeigen:
- Figur 1: ein Ausführungsbeispiel eines erfindungsgemäßen Synchronringes, bei dem die Scheibe und der Grundkörper mittels einer formschlüssigen Verbindung aneinander befestigt sind,
- Figur 2: eine Schnittdarstellung des Synchronringes nach Figur 1,
- Figur 3: einen Ausschnitt eines weiteren erfindungsgemäßen Synchronringes, bei dem die Scheibe und der Grundkörper formschlüssig aneinander befestigt und mittels einer Verprägung aneinander gesichert sind,
- Figur 4: einen Ausschnitt eines weiteren erfindungsgemäßen Synchronringes, bei dem die Scheibe und der Grundkörper formschlüssig aneinander befestigt und mittels Schweißen aneinander gesichert sind,
- Figur 5: einen Ausschnitt eines dreiteiligen Synchronringes gemäß Erfindung, bei dem die Verzahnung und die Scheibe mit dem Grundkörper durch Schweißen verbunden sind,
- Figur 6: ein weiteres Ausführungsbeispiel eines erfindungsgemäßen Synchronringes mit radial nach außen gerichteten Mitnehmern und
- Figur 6a: eine alternative Darstellung des Mitnehmers an dem Synchronring nach Figur 6.

### Detaillierte Beschreibung der Zeichnungen

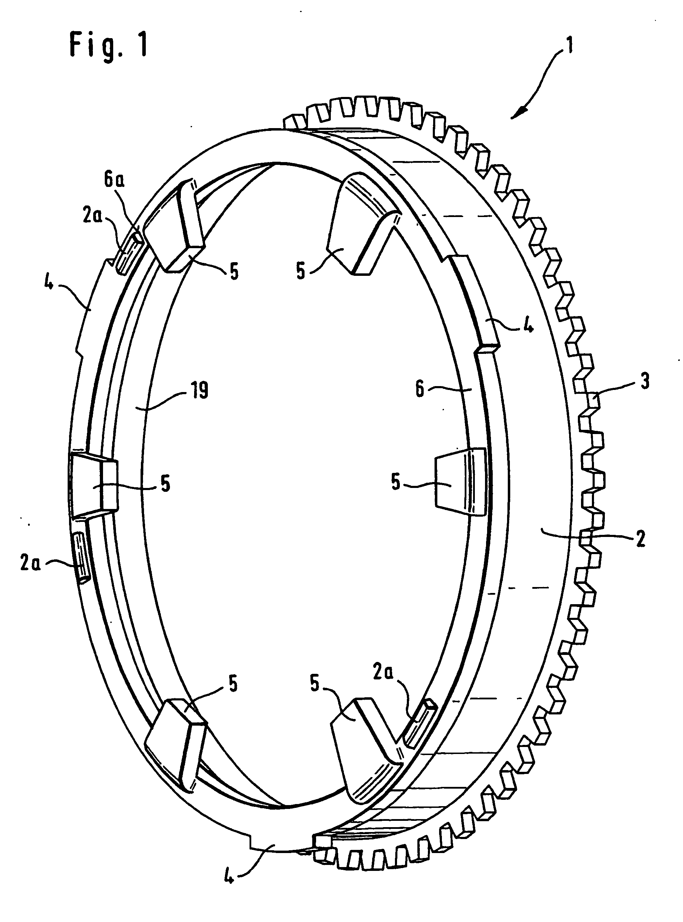

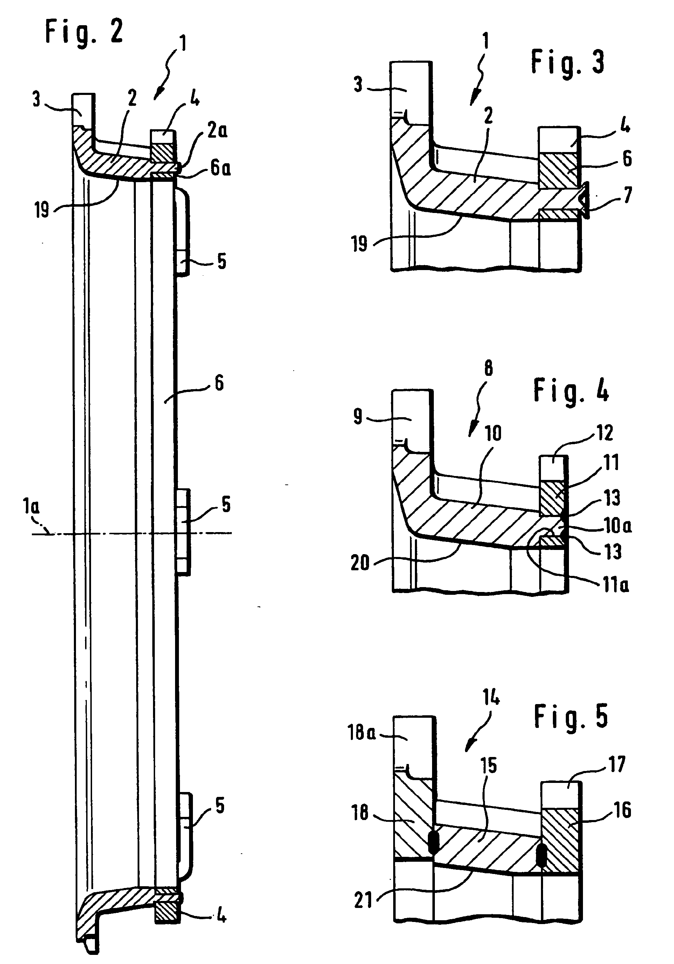

In Figur 1 und Figur 2 ist als ein Ausführungsbeispiel der Erfindung ein Außensynchronring 1 dargestellt. Der Außensynchronring 1 weist einen ringförmig ausgebildeten Grundkörper 2 auf. An dem Grundkörper 2 ist umfangsseitig innen eine Reibfläche 19 sowie eine radial nach außen gerichtete Verzahnung 3 ausgebildet. An der der Verzahnung 3 gegenüberliegenden Seite des Außensynchronringes 1 stehen Mitnehmer 4 und 5 radial ab. Die Mitnehmer 4 und 5 sind an einer ringförmigen zu dem Grundkörper 2 separaten Scheibe 6 ausgebildet. Dabei weisen die Mitnehmer 4 radial nach außen von der Rotationsachse 1 a des Außensynchronringes 1 (Figur 2) weg und die Mitnehmer 5 radial nach innen zu der Rotationsachse 1a hin. Der Grundkörper 2 ist aus einem napfförmigen Formteil gebildet und die Scheibe 6 ist aus einem Blech gestanzt. Aus dem Grundkörper 2 stehen stirnseitig sich mit der Rotationsachse 1a erstreckende Laschen 2a hervor. Die Laschen 2a greifen formschlüssig in Ausnehmungen 6a der Scheibe 6 ein, so dass der Grundkörper 2 und die Scheibe 6 starr miteinander verbunden sind.

Figur 3 zeigt eine alternative Befestigung der Scheibe 6 an dem Grundkörper 2. Mittels einer Prägung-7 ist Material der Laschen 2a in den Ausnehmungen plastisch verformt. Die Laschen 2a und die Scheibe 6 sind über die formschlüssige Verbindung sowie durch die Prägung 7 unlösbar miteinander verbunden.

Figur 4 zeigt einen Ausschnitt eines Synchronringes 8, dessen einteilig mit einer Verzahnung 9 ausgebildeter Grundkörper 10 mit einer Reibfläche 20 stirnseitig aus dem Grundkörper 10 hervorstehende Laschen 10a aufweist. Die Laschen 10a greifen formschlüssig in Ausnehmungen 11 a einer Scheibe 11 mit Mitnehmern 12 ein. Die Scheibe 11 ist über Verschweißungen 13 an den Laschen 10a des Grundkörpers 10 gesichert. Die Mitnehmer 12 stehen radial nach außen von der nicht dargestellten Rotationsachse des Synchronringes 8 wegweisend aus der Scheibe 11 hervor. Der Grundkörper 10 ist aus einem Blech geformt, das in seinem Ausgangszustand dicker als das Blech der Scheibe 11 ist.

Figur 5 zeigt einen Schnitt durch einen Teil eines Synchronringes 14. Der Synchronring 14 ist dreiteilig ausgebildet und weist einen Grundkörper 15 aus Messing mit einer Reibfläche 21, eine Scheibe 16 mit Mitnehmern 17 sowie eine Zahnscheibe 18 mit einer Verzahnung 18a auf. Der Mitnehmer 17 und die Zahnscheibe 18 sind aus Stahl gefertigt und mit dem Grundkörper 15 verschweißt.

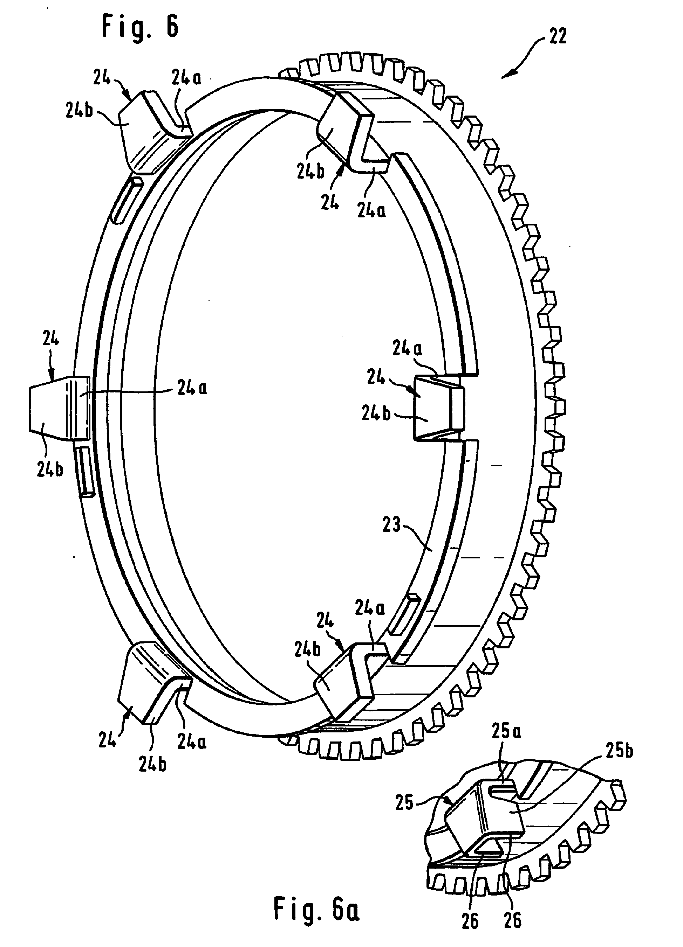

Figur 6 zeigt einen Außensynchronring 22, der in seinem Aufbau in Wesentlichen dem Außensynchronring 1 entspricht. Am Außensynchronring 22 ist eine Scheibe 23 befestigt, deren Mitnehmer 24 radial nach außen gerichtet sind. Die Mitnehmer 24 sind winkelförmig von der Scheibe 23 abgebogen. Dabei steht ein Abschnitt 24a des Mitnehmers von der Stirnseite der Scheibe 23 wegweisend aus dem Außensynchronring 22 hervor. Dem Abschnitt 24a schließt sich ein Abschnitt 24b an. Der Abschnitt 24b verläuft von dem Abschnitt 24a radial nach außen abgewinkelt. Der Mitnehmer 25 weist zunächst die Abschnitte 25a und 25b auf. Von dem radial nach außen von dem Abschnitt 25a abstehenden Mitnehmer 25 sind zwei weitere Abschnitte abgewinkelt. Diese Abschnitte bilden die Flanken 26 des Mitnehmers.

### Bezugszeichen

- 1: Außensynchronring
- 1a: Rotationsachse
- 2: Grundkörper
- 2a: Lasche
- 3: Verzahnung
- 4: Mitnehmer
- 5: Mitnehmer
- 6: Scheibe
- 6a: Ausnehmung
- 7: Prägung
- 8: Synchronring
- 9: Verzahnung
- 10: Grundkörper
- 10a: Lasche
- 11: Scheibe
- 11a: Ausnehmung
- 12: Mitnehmer
- 13: Verschweißung
- 14: Synchronring
- 15: Grundkörper
- 16: Scheibe
- 17: Mitnehmer
- 18: Zahnscheibe
- 18a: Verzahnung
- 19: Reibfläche
- 20: Reibfläche
- 21: Reibfläche
- 22: Außensynchronring
- 23: Scheibe
- 24: Mitnehmer
- 24a: Abschnitt
- 24b: Abschnitt
- 25: Mitnehmer
- 25a: Abschnitt
- 25b: Abschnitt
- 26: Flanke

## Patentansprüche

1. Mehrteiliger Synchronring (1, 8, 14, 22) mit einem ringförmig ausgebildeten Grundkörper (2, 10, 15) und mit wenigstens einer Reibfläche (19, 20, 21) an dem Grundkörper (2, 10, 15), wobei der Synchronring (1, 8, 14) umfangsseitig eine radial nach außen gerichtete Verzahnung (3, 9, 18a) aufweist und wobei an dem Synchronring (1, 8, 14) der Verzahnung (3, 9, 18a) gegenüberliegend wenigstens ein Mitnehmer(4, 5, 12, 17, 24, 25) radial absteht, wobei der Mitnehmer (4, 5, 12, 17, 24. 25) an einer ringförmigen zu dem Grundkörper (2, 10, 15) separaten Scheibe (6, 11, 16, 23) ausgebildet is, **dadurch gekennzeichnet, dass** der Mitnehmer (4, 5, 12, 17, 24, 25) von der Verzahnung (3, 9, 18a) beabstandet ist.

2. Synchronring nach Anspruch 1, **dadurch gekennzeichnet, dass** der Mitnehmer (4, 12, 17, 24, 25) radial nach außen von der Rotationsachse (1a) des Synchronringes (1, 8, 14) wegweisend aus der Scheibe (6, 11, 16) hervorsteht.

3. Synchronring nach Anspruch 2, **dadurch gekennzeichnet, dass** der Mitnehmer (24, 25) in seinem Querschnitt winkelförmig ausgebildet ist, wobei der Mitnehmer (24, 25) anfangs von der Scheibe (23) abgewinkelt stirnseitig aus dem Synchronring hervorsteht und dann radial nach außen weisend abgebogen ist.

4. Synchronring nach Anspruch 3, **dadurch gekennzeichnet, dass** der Mitnehmer (25) in die Rotationsrichtungen weisende verbreiterte Flanken (26) aufweist, wobei die Flanken (26) von dem Mitnehmer (25) in Richtung der Verzahnung abgewinkelte Abschnitte sind.

5. Synchronring nach Anspruch 1, **dadurch gekennzeichnet, dass** der Mitnehmer (5) radial nach innen zu der Rotationsachse (1 a) des Syn chronringes (1) hinweisend aus der Scheibe (6) hervorsteht.

6. Synchronring nach Anspruch 5 **dadurch gekennzeichnet, dass** der Mitnehmer (5) in seinem Querschnitt winkelförmig ausgebildet ist, wobei der Mitnehmer (5) anfangs von der Scheibe (6) abgewinkelt stirnseitig aus dem Synchronring (1) hervorsteht und dann radial nach innen weisend abgebogen ist.

7. Synchronring nach Anspruch 1, **dadurch gekennzeichnet, dass** der Grundkörper (2, 10, 15) und die Scheibe (6, 11, 16) starr miteinander verbunden sind.

8. Synchronring nach Anspruch 7, **dadurch gekennzeichnet, dass** der Grundkörper (10) und die Scheibe (11) miteinander verschweißt sind.

9. Synchronring nach Anspruch 8, **dadurch gekennzeichnet, dass** die Scheibe (16) aus einem mit Messing verschweißbaren Stahlwerkstoff hergestellt ist und dass der Grundkörper (15) aus Messing hergestellt mit der Scheibe (16) verschweißt ist.

10. Synchronring nach Anspruch 7, **dadurch gekennzeichnet, dass** der Grundkörper (2, 10) stirnseitig aus dem Grundkörper (2, 10) hervorstehende und sich mit der Rotationsachse (1a) erstreckende Laschen (20, 10a) aufweist, wobei die Laschen (20, 10a) formschlüssig in Ausnehmungen (6a, 11a) in der Scheibe (6, 11) eingreifen.

11. Synchronring nach Anspruch 10, **dadurch gekennzeichnet, dass** die Laschen (10a) und die Scheibe (11) miteinander verschweißt sind.

12. Synchronring nach Anspruch 10, **dadurch gekennzeichnet, dass** der Grundkörper (2) und die Scheibe (6) durch in den Ausnehmungen (6a) plastisch verformtes Material der Laschen (2a) unlösbar miteinander verbunden sind.

13. Synchronring nach Anspruch 1, **dadurch gekennzeichnet, dass** der Grundkörper (2, 10, 15) und die Scheibe (6, 11, 16) aus Blech gebildet sind, wobei der Grundkörper (2, 10, 15) ein Formteil und die Scheibe (6, 11, 16) ein Stanzteil ist.

14. Synchronring nach Anspruch 1, **dadurch gekennzeichnet, dass** der Grundkörper (10) und die Scheibe (11) aus Blech gebildet sind, wobei der Grundkörper (10) aus einem Blech geformt ist, dessen Dicke in seinem Ausgangszustand von der Dicke des Bleches der Scheibe (11) abweicht.

15. Synchronring nach Anspruch 1, **dadurch gekennzeichnet, dass** der Grundkörper (2, 10) und die Scheibe (6, 11) aus Blech gebildet sind, wobei das Blech des Grundkörpers (2, 10) aus einem anderen Stahl als das Blech der Scheibe (6, 11) ist.

16. Synchronring nach Anspruch 1, **dadurch gekennzeichnet, dass** der Grundkörper (2, 10) und die Scheibe (6, 11) aus Stahlblech gebildet sind, wobei das Stahlblech des Grundkörpers (2, 10) und das Stahlblech der Scheibe (6, 11) zumindest an ihre Oberfläche voneinander abweichende Härtegrade aufweisen.

17. Synchronring nach Anspruch 1, **dadurch gekennzeichnet, dass** die Verzahnung (18a) aus Stahl separat zum Grundkörper (15) ausgebildet ist und dass der Grundkörper (15) aus Messing hergestellt ist.

18. Synchronring nach Anspruch 17, **dadurch gekennzeichnet, dass** die Verzahnung (18a) aus einem mit Messing verschweißbaren Stahlwerkstoff hergestellt ist und dass der Grundkörper (15) mit der Verzahnung (18a) verschweißt ist.

## Claims

1. Multi-piece synchroniser ring (1, 8, 14, 22) with an annular base body (2, 10, 15) and at least one friction surface (19, 20, 21) on the base body (2, 10, 15), the synchroniser ring (1, 8, 14) comprising on its periphery, a radially outwards directed gearing (3, 9, 18a), at least one entraining element (4, 5, 12, 17, 24) arranged opposite the gearing (3, 9, 18a) on the synchroniser ring (1, 8, 14) protruding in radial direction while being configured on an annular disk (6, 11, 16, 23) that is separate from the base body (2, 10, 15), **characterised in that** the entraining element (4, 5, 12, 17, 24, 25) is spaced from the gearing (3, 9, 18a).

2. Synchroniser ring according to claim 1, **characterised in that** the entraining element (4, 12, 17, 24, 25) projects radially outwards out of the disk (6, 11, 16) while pointing away from the axis of rotation (1a) of the synchroniser ring (1, 8, 14).

3. Synchroniser ring according to claim 2, **characterised in that** the entraining element (24, 25) has an angular cross-sectional shape, the entraining (24, 25) starts at first angled from the disk (23) to project frontally out of the synchroniser ring and is then bent to point radially outwards.

4. Synchroniser ring according to claim 3, **characterised in that** the entraining element (25) comprises broadened flanks (26) that point in the directions of rotation, and the flanks (26) are sections that are angled from the entraining element (25) in the direction of the gearing.

5. Synchroniser ring according to claim 1, **characterised in that** the entraining element (5) projects out of the disk (6) to point radially inwards towards the axis of rotation (1 a) of the synchroniser ring (1).

6. Synchroniser ring according to claim 5, **characterised in that** the entraining element (5) has an angular cross-sectional shape, the entraining (5) starts at first angled from the disk (6) to project frontally out of the synchroniser ring (1) and is then bent to point radially inwards.

7. Synchroniser ring according to claim 1, **characterised in that** the base body (2, 10, 15) and the disk (6, 11, 16) are connected rigidly to each other.

8. Synchroniser ring according to claim 7, **characterised in that** the base body (10) and the disk (11) are welded to each other.

9. Synchroniser ring according to claim 8, **characterised in that** the disk (16) is made of a steel material that can be welded to brass, and that the base body (15) made out of brass is welded to the disk (16).

10. Synchroniser ring according to claim 7, **characterised in that** the base body (2, 10) comprises tabs (2a, 10a) that project frontally out of the base body (2, 10) to extend with the axis of rotation (1 a), and the tabs (2a, 10a) engage positively into recesses (6a, 11 a) in the disk (6, 11).

11. Synchroniser ring according to claim 10, **characterised in that** the tabs (10a) and the disk (11 ) are welded to each other.

12. Synchroniser ring according to claim 10, **characterised in that** the base body (2) and the disk (6) are connected inseparably to each other through material of the tabs (2a) that is plastically deformed in the recesses (6a).

13. Synchroniser ring according to claim 1, **characterised in that** the base body (2, 10, 15) and the disk (6, 11, 16) are made out of sheet metal, the base body (2, 10, 15) being a shaped part and the disk (6, 11, 16, being a punched part.

14. Synchroniser ring according to claim 1, **characterised in that** the base body (10) and the disk (11) are made out of sheet metal, the base body (10) being formed out of a sheet metal, the thickness of which in its initial state is different from the thickness of the sheet metal of the disk (11).

15. Synchroniser ring according to claim 1, **characterised in that** the base body (2, 10) and the disk (6, 11) are made out of sheet metal, the sheet metal of the base body (2, 10) being a steel different from the sheet metal of the disk (6, 11).

16. Synchroniser ring according to claim 1, **characterised in that** the base body (2, 10) and the disk (6, 11) are made out of sheet steel, the sheet steel of the base body (2, 10) and the sheet steel of the disk (6, 11) possessing different degrees of hardness at least on their surface.

17. Synchroniser ring according to claim 1, **characterised in that** the gearing (18a) is made out of steel separately from the base body (15), and the base body (15) is made out of brass.

18. Synchroniser ring according to claim 17, **characterised in that** the gearing (18a) is made out of a steel material that can be welded to brass, and the base body (15) is welded to the gearing (18a).

## Revendications

1. Anneau de synchronisation (1, 8, 14, 22) à pièces multiples avec un corps de base (2, 10, 15) annulaire et avec au moins une surface frottante (19, 20, 21) sur le corps de base (2, 10, 15), l'anneau de synchronisation (1, 8, 22) comprenant du côté périphérique, une denture (3, 9, 18a) orientée radialement vers l'extérieur, au moins un entraîneur (4, 5, 12, 17, 24, 25) situé vis-à-vis de la denture (3, 9, 18a) sur l'anneau de synchronisation (1, 8, 14) faisant saillie en direction radiale, ledit entraîneur (4, 5, 12, 17, 24, 25) étant configuré sur un disque annulaire (6, 11, 16, 23) séparé du corps de base (2, 10, 15), **caractérisé en ce que** l'entraîneur (4, 5, 12, 17, 24, 25) est situé à l'écart de la denture (3, 9, 18a).

2. Anneau de synchronisation selon la revendication 1, **caractérisé en ce que** l'entraîneur (4, 12, 17, 24, 25) fait saillie radialement vers l'extérieur à partir du disque (6, 11, 16) en étant orienté à l'opposé de l'axe de rotation (1a) de l'anneau de synchronisation (1, 8, 14),

3. Anneau de synchronisation selon la revendication 2, **caractérisé en ce que** l'entraîneur (24, 25) à une section droite angulaire, ledit entraîneur (24, 25) étant d'abord replié à partir du disque (23) pour faire frontalement saillie à partir de l'anneau de synchronisation et, puis, il est rabattu radialement vers l'extérieur.

4. Anneau de synchronisation selon la revendication 3, **caractérisé en ce que** l'entraîneur (25) comprend des flancs (26) élargis qui sont orientés dans les directions de rotation, et ces flancs (26) sont des sections qui sont repliées à partir de l'entraîneur (25) en direction de la denture.

5. Anneau de synchronisation selon la revendication 1, **caractérisé en ce que** l'entraîneur (5) fait saillie radialement vers l'intérieur à partir du disque (6) en étant orienté vers l'axe de rotation (1a) de l'anneau de synchronisation (1).

6. Anneau de synchronisation selon la revendication 5, **caractérisé en ce que** l'entraîneur (5) à une section droite angulaire, ledit entraîneur (5) étant d'abord replié à partir du disque (6) pour faire frontalement saillie à partir de l'anneau de synchronisation (1) et, puis, il est rabattu radialement vers l'intérieur.

7. Anneau de synchronisation selon la revendication 1, **caractérisé en ce que** le corps de base (2, 10, 15) et le disque (8, 11, 16) sont reliés de manière rigide, l'un à l'autre.

8. Anneau de synchronisation selon la revendication 7, **caractérisé en ce que** le corps de base (10) et le disque (11) sont soudés, l'un à l'autre.

9. Anneau de synchronisation selon la revendication 8, **caractérisé en ce que** le disque (16) est fabriqué en un acier qui peut être soudé au laiton, et le corps de base (15) est fabriqué en laiton et soudé au disque (16).

10. Anneau de synchronisation selon la revendication 7, **caractérisé en ce que** le corps de base (2, 10) comprend des talons (2a, 10a) qui font frontalement saillie à partir du corps de base (2, 10) en s'étendant avec l'axe de rotation (1a), et que ces talons (2a, 10a) s'engagent de manière positive dans des évidements (6a, 11 a) dans le disque (6, 11).

11. Anneau de synchronisation selon la revendication 10, **caractérisé en ce que** les talons (10a) et le disque (11) sont soudés, les uns à l'autre.

12. Anneau de synchronisation selon la revendication 10, **caractérisé en ce que** le corps de base (2) et le disque (6) sont reliés, l'un à l'autre, de manière non détachable par du matériau des talons (2a) qui est plastiquement déformé dans les évidements (6a).

13. Anneau de synchronisation selon la revendication 1, **caractérisé en ce que** le corps de base (2, 10, 15) et le disque (6, 11, 16) sont fait en tôle, le corps de base (2, 10, 15) étant une pièce formée et le disque (6, 11, 16) étant une pièce découpée.

14. Anneau de synchronisation selon la revendication 1, **caractérisé en ce que** le corps de base (10) et le disque (1) sont fait en tôle, le corps de base (10) étant formé en une tôle dont l'épaisseur à son état de départ est différente de l'épaisseur de la tôle du disque (11).

15. Anneau de synchronisation selon la revendication 1, **caractérisé en ce que** le corps de base (2, 10) et le disque (6, 11) sont fait en tôle, la tôle du corps de base (2, 10) étant un acier différent de la tôle du disque (6, 11).

16. Anneau de synchronisation selon la revendication 1, **caractérisé en ce que** le corps de base (2, 10) et le disque (6, 11) sont fait en tôle d'acier, la tôle d'acier du corps de base (2, 10) et la tôle d'acier du disque (6, 11) ayant des degrés de dureté différents, au moins sur leur superficie.

17. Anneau de synchronisation selon la revendication 1, **caractérisé en ce que** la denture (18a) est fabriquée en acier séparément du corps de base (15), et le corps de base (15) est fabriqué en laiton.

18. Anneau de synchronisation selon la revendication 17, **caractérisé en ce que** la denture (18a) est fabriquée en un acier qui peut être soudé au laiton, et le corps de base (15) est soudé à la denture (18a).
